# EUROPEAN PATENT SPECIFICATION

(11) **EP 1 647 436 B1**
(45) Date of publication and mention of the grant of the patent: **03.03.2010**
(21) Application number: 05022520.0
(22) Date of filing: 14.10.2005
(51) Int. Cl.: B60K 28/00, B60K 26/00, F02D 11/02

(54) **Position detection device for an astride riding type vehicle**
Positionsgeber für ein Zweiradfahrzeug
Detecteur de position pour un véhicule à deux roues

(30) Priority: 14.10.2004 JP 2004299519
(43) Date of publication of application: 19.04.2006
(73) Proprietor: Yamaha Hatsudoki Kabushiki Kaisha, Iwata-shi, Shizuoka-ken (JP)
(72) Inventor: Hino, Haruyoshi, Iwata-shi Shizuoka-ken (JP); Murota, Keiko, Iwata-shi Shizuoka-ken (JP); Shirazawa, Hideki, Iwata-shi Shizuoka-ken (JP); Terada, Junji, Iwata-shi Shizuoka-ken (JP); Ono, Tomohiro, Iwata-shi Shizuoka-ken (JP)
(74) Representative: Grünecker, Kinkeldey, Stockmair & Schwanhäusser Anwaltssozietät

(56) References cited:
- EP-A- 1 154 346
- EP-A- 1 217 493
- EP-A- 1 365 128
- US-A1- 2003 129 886
- US-A1- 2004 099 080

## Description

The present invention relates to a position detection device, and in particular to a relative position detection device capable of detecting a reference position of a first member and a second member for relative displacement to each other. It further relates to an astride riding type vehicle having such a position detection device, and in particular to an astride riding type vehicle in which the relative position detection device is provided for controlling an accelerator opening.

Hitherto, there have been proposed many systems in which a first and a second member are provided capable of relative displacement and the first and second members are displaced relative to each other so that an object to be controlled is controlled in response to the amount of displacement.

For example, in astride riding type vehicles, an accelerator grip is mounted on a handlebar for rotation and an accelerator is rotated with respect to the handlebar for the opening/closing control of a throttle valve of an internal combustion engine (engine).

In such astride riding type vehicles, an electric relative position detection-and-control device has been known in which the rotational operation of the accelerator is detected by a potentiometer and the throttle valve is opened/closed by an actuator based on the output voltage.

In the electric relative position detection-and-control device, in order to prevent an accident that the rotational operation of the accelerator does not correspond to the opening/closing movement of the throttle valve as a result of malfunction of the potentiometer or the like, besides the potentiometer, a mechanical completely-closed switch is provided capable of detecting a completely-closed position of the accelerator so as to close the throttle valve.

A system equipped with a magnetic relative position detection-and-control device has been known in which a magnet is disposed in an accelerator and the rotational position of the accelerator is detected using change in the magnetic flux density, and a system using a Hall lC has also been proposed.

For example, in JP-A-Hei 7-324637, for the purpose of detecting the rotational position of the accelerator so as to control ignition of the internal combustion engine, a magnet is fixed to an accelerator, two digital Hall ICs are fixed to the handle and it is judged in which one of idling, middle-speed and high speed ranges the opening range of the accelerator is included. In this case, detection of the amount of rotation of the accelerator necessary for the opening/closing control of the throttle valve, must be performed using a potentiometer or the like.

Further, in Fig. 6 of JP-A-2002-256904 is disclosed a relative position detection device in which a permanent magnet is fixed to an accelerator and two Hall ICs having the same function are fixed to a housing fastened to a handle shaft. In this case, although details are not clear, an electric signal is outputted in response to the position of the permanent magnet during rotation of the accelerator, using two Hall ICs having the same function.

Further United States Patent US 2004/0099080 disclosed also a similar system according to the preamble of claim 1.

However, since in a relative position detection device using a conventional potentiometer, the potentiometer is larger than an accelerator, external appearance is likely to become poorer if it is disposed around the accelerator. Therefore, it must be disposed at a position other than that around the accelerator and connected to the accelerator with a wire cable or the like, which is likely to increase the number of parts, human-hours required for an assembly process and the like. In addition, since a potentiometer larger than an accelerator is disposed, as well as a wire cable or the like, it is difficult to improve the quality of external appearance around the accelerator.

Further, since in a conventional relative position detection device utilizing a magnetic property, the width of a magnet is small in the positional relation between a Hall IC and the magnet, for example, as shown in Fig. 2 of JP-A-Hei 7-324637, if the accelerator grip is rotated, the Hall IC is displaced to a position away from the magnet, the flux density exerted on the Hall IC becomes very small. Therefore, if a magnetic force is applied from the outside, the Hall IC might malfunction under the influence of the magnetic force.

In view of the foregoing, an object of the present invention is to provide a position detection device (and in particular a relative position detection device) capable of preventing malfunction easily and being constructed compactly at a low cost.

This objective is solved in an inventive manner by a position detection device having a first member and a second member, which are capable of relative displacement to each other, the first member comprising a magnet, and the second member comprising a first magnetic field property sensor for outputting a detection signal of a reference position from a magnetic field property of a magnetic field formed by the magnet, wherein the magnet has an S-pole section and an N-pole section that are arranged side by side in the direction of the relative displacement; and the first magnetic field property sensor is configured so as to receive magnetic force from the magnet at all times throughout a range in which the first member and the second member are displaceable relative to each other.

Preferably, the first magnetic field property sensor is a first Hall effect sensor, wherein the magnetic property is a flux density of the magnetic field formed by the magnet.

Further, preferably the first Hall effect sensor is a digital Hall lC.

Still further, preferably the second member further comprises a second Hall effect sensor for detecting change of the flux density, and the second Hall effect sensor is located in a range within which the flux density of the magnetic field of the magnet changes monotonously.

According to a preferred embodiment, the present position detection device further comprises a magnetic metal plate that is disposed separate from and facing the magnet, wherein at least the first Hall effect sensor is disposed between the metal plate and the magnet.

Another object of the present invention is to provide an astride riding type vehicle in which a malfunction scarcely happens during control of the accelerator opening, the number of parts, human-hours required for assembling and the like can be kept small and the quality of external appearance around an accelerator can be improved.

This objective is solved in an inventive manner by an astride riding type vehicle having the position detection device, as discussed above, mounted thereon for the control of accelerator opening of an internal combustion engine, wherein one of the magnet and the first Hall effect sensor is fixed to a handlebar and the other to an accelerator grip mounted to the handlebar for rotation, and the position detection device is mounted in such a manner that a completely-closed position of the accelerator grip is defined as the reference position.

In the following, the present invention is explained in greater detail with respect to several embodiments thereof in conjunction with the accompanying drawings, wherein:
- Fig. 1: is a plan view, partly in section, of a (relative) position detection device of an embodiment, which is mounted to an accelerator;
- Fig. 2: is a sectional view, taken along line A―A of Fig. 1, of the relative position detection device of this embodiment, which is mounted to the accelerator;
- Fig. 3: shows the accelerator of this embodiment, in which (a) is a longitudinal sectional view and (b) is a sectional view taken along line B―B of (a);
- Fig. 4: is a perspective view of a split housing of this embodiment;
- Fig. 5: is a plan view of a detection section of this embodiment;
- Fig. 6: is a sectional view, showing the positional relation between the end portion of the accelerator and the detection section of this embodiment; and
- Fig. 7: are graphs, showing changes in flux density and those of detection signals in a digital Hall IC and a linear Hall IC in this embodiment, in which (a) shows change in flux density at the position of the digital Hall IC, (b) shows change of a first detection signal, (c) shows change in flux density at the position of the linear Hall IC, and (d) shows change of a second detection signal.

Now, an embodiment is described below.

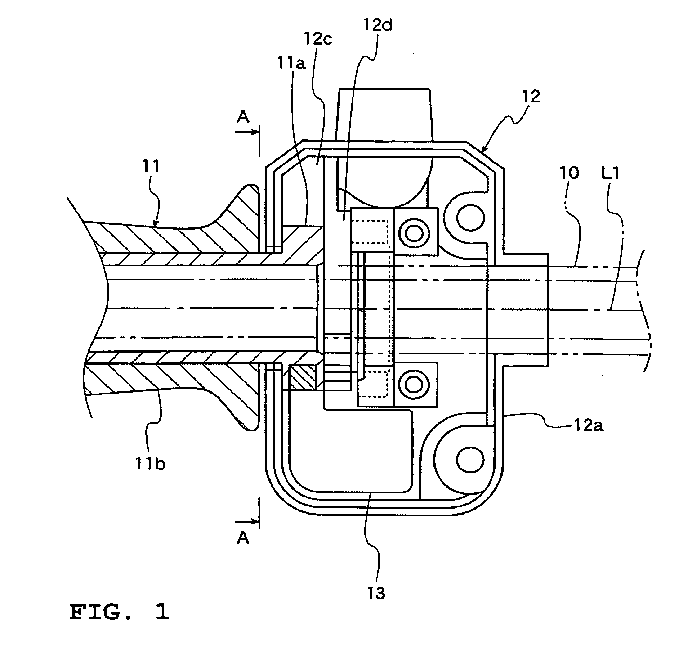

Fig. 1 to Fig. 8 show an example in which the (relative) position detection device according to this embodiment is applied to an accelerator section of a motorcycle as an astride riding type vehicle.

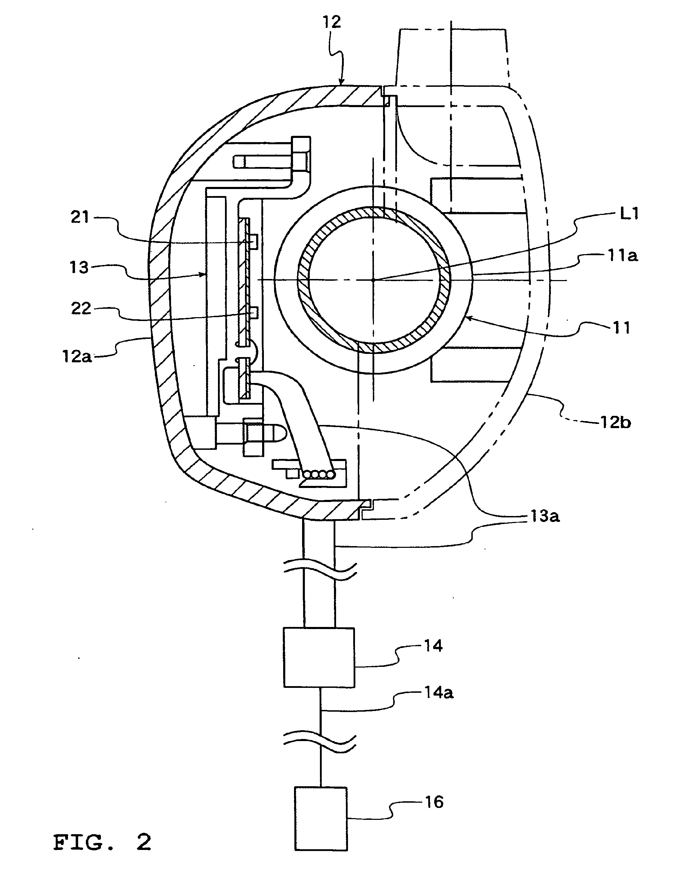

The relative position detection device has an accelerator grip (accelerator) 11 as a "first member" that is mounted for rotation on a handlebar 10 near one end thereof, and a housing 12 as a "second member" that is fixed to the handlebar 10 at a position corresponding to a tube guide section 11 a located at the end portion on the laterally central side of the accelerator 11, as shown in Fig. 1 and Fig. 2. The tube guide section 11 a of the accelerator 11 is contained in the housing 12 for rotation relative thereto (for relative movement).

Inside the housing 12, as shown in Fig. 2, a detection section 13 for detecting opening of the accelerator 11 is disposed opposite the tube guide section 11 a of the accelerator 11, wires 13a for the detection signal extending from the detection section 13 are connected to a control section 14 provided on a vehicle body (not shown), and further a wire 14a for the control signal extending from the control section 14 is connected to a controller 16 of a drive source.

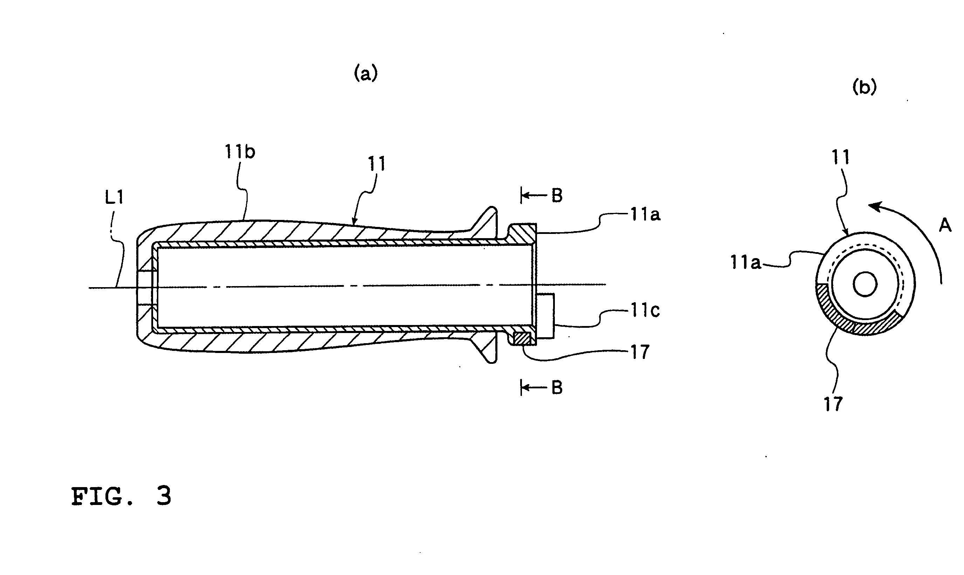

The accelerator 11 of the relative position detection device comprises the tube guide section 11 a disposed inside the housing 12 and a grip section 11 b disposed outside the housing 12, as shown in Fig. 3. The tube guide section 11 a has a rotation restriction section 11 c for restricting rotation of the accelerator 11, and a permanent magnet 17 assuming an arcuate shape with its are center on a rotational axis L1 of the accelerator 11 and embedded in the tube guide section 11a of the accelerator 11.

On the other hand, the housing 12, as shown in Fig. 1 and Fig. 2, comprises a pair of split housings 12a, 12b for securely holding the handlebar 10 diametrically from both sides thereof, and the tube guide section 11 a of the accelerator 11 is disposed for rotation in an inside space defined by the split housings 12a, 12b.

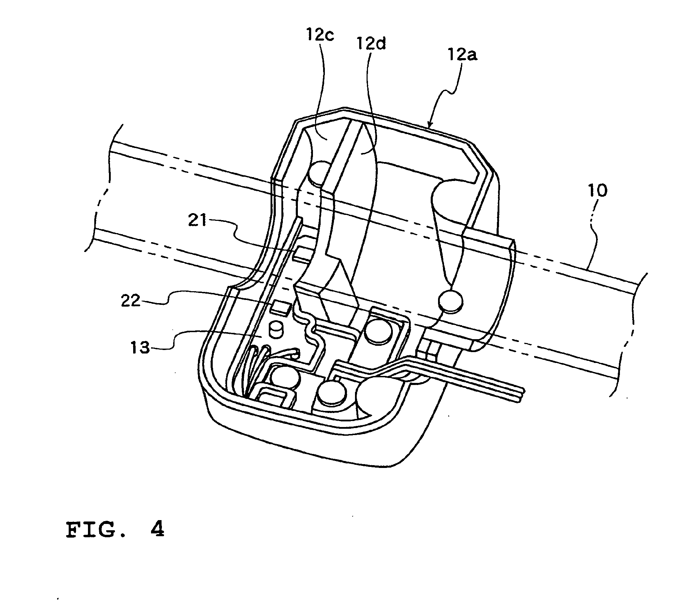

Inside one split housing 12a, as shown in Fig. 1 and Fig. 4, a container section 12c for containing the tube guide section 11a of the accelerator 11 is defined by a rib-like projection piece 12d. The projection piece 12d is provided in a given positional relation with the rotation restriction section 11 c on the tube guide section 11 a of the accelerator 11 and arranged such that when it comes in abutment against the projection section 12d, the accelerator 11 is restricted of its rotation but rotatable between the completely-closed position θ0 and the fully-open position θm therethrough.

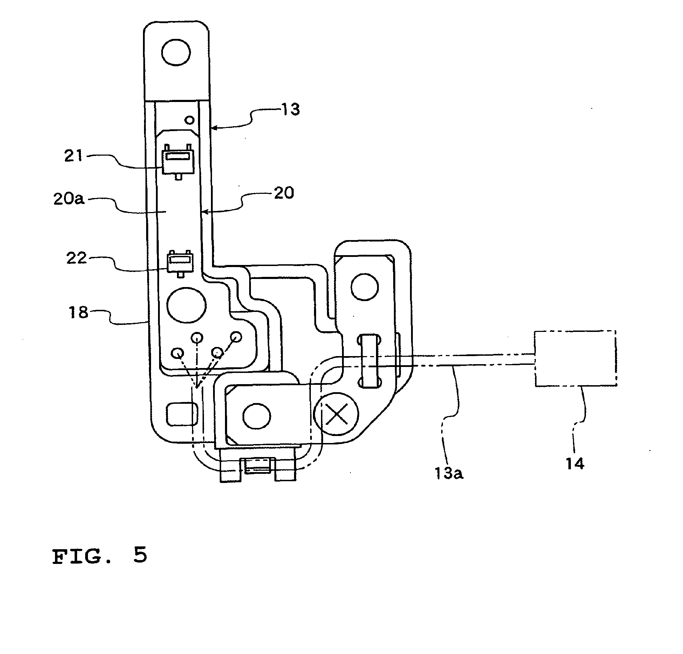

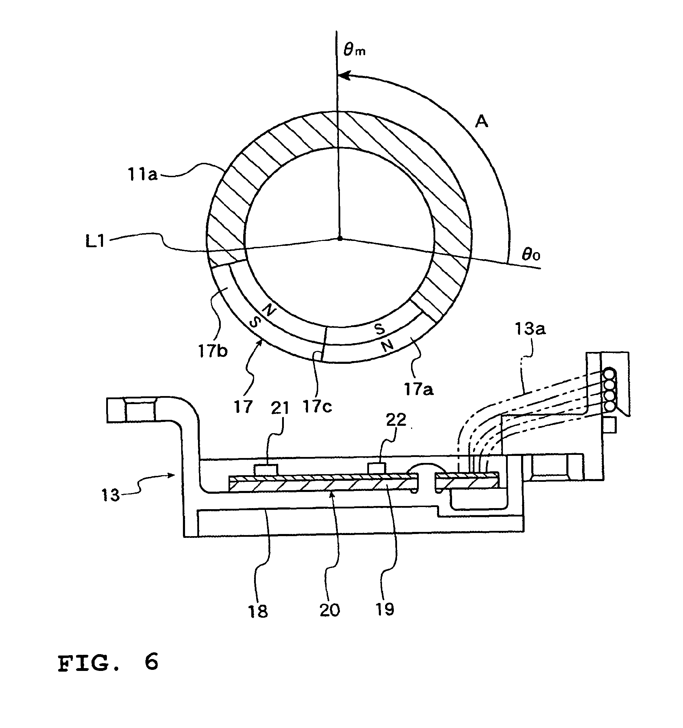

In the housing section 12c of the split housing 12a and in the vicinity thereof is fixed the detection section 13 for detecting the flux density of the magnetic field for detection formed by the permanent magnet 17 in the tube guide section 11 a of the accelerator 11. The detection section 13 is configured, as shown in Fig. 5 and Fig. 6, such that a flat plate-like circuit board 20 is supported on a circuit board holder 18 fixed to the split housing 12a, and in the circuit board 20 is embedded a magnetic metal plate 19 made of iron plate or the like. The circuit board itself may be made of iron, or an iron plate may be provided under the circuit board.

The circuit board 20 has a narrow section 20a to be disposed in the housing section 12c of the split housing 12a, as shown in Fig. 5, and on the narrow section 20a, a Hall IC 21 as a first Hall lC and a linear Hall lC 22 as a second Hall IC are mounted opposite to each other in a spaced relation from the permanent magnet 17.

The permanent magnet 17 in the tube guide section 11 a of the accelerator 11 is formed of magnetic pole sections 17a, 17b fixed adjacent to each other in the rotating direction of the accelerator 11. The magnetic pole section 17a which is disposed forwardly in the direction "A" indicating the movement from the side of a completely-closed position θ0 toward the side of a fully-open position θm of the accelerator 11, has an N-pole on the outer side and an S-pole on the inner side, while the magnetic pole section 17b which is disposed rearwardly in the direction "A", has an S-pole on the outer side and an N-pole on the inner side. Therefore, the permanent magnet 17 is configured such that the N-pole and the S-pole disposed in the outer sides of the magnetic pole sections 17a, 17b in the direction "A" indicating the movement from the side of the completely-closed position θ0 toward the side of the fully-open position θm, are disposed side by side.

On the other hand, the digital Hall IC 21 and the linear Hall IC 22, in the circuit board 20, are disposed in the direction perpendicular to the rotation axis L1 of the accelerator 11, that is, in the rotating direction of the accelerator 11 at a given distance away from each other.

Of these Hall ICs, the digital Hall IC 21 is at a position corresponding to a boundary section 17c between the N-pole and the S-pole in the circumferential direction of the permanent magnet 17 when the accelerator 11 is at a completely-closed position θ0, as shown in Fig. 6. More specifically, the accelerator 11 has a play around the completely-closed position θ0 and the digital Hall lC 21 is at a position corresponding to that in the vicinity of the boundary section 17c and a little toward the N-pole.

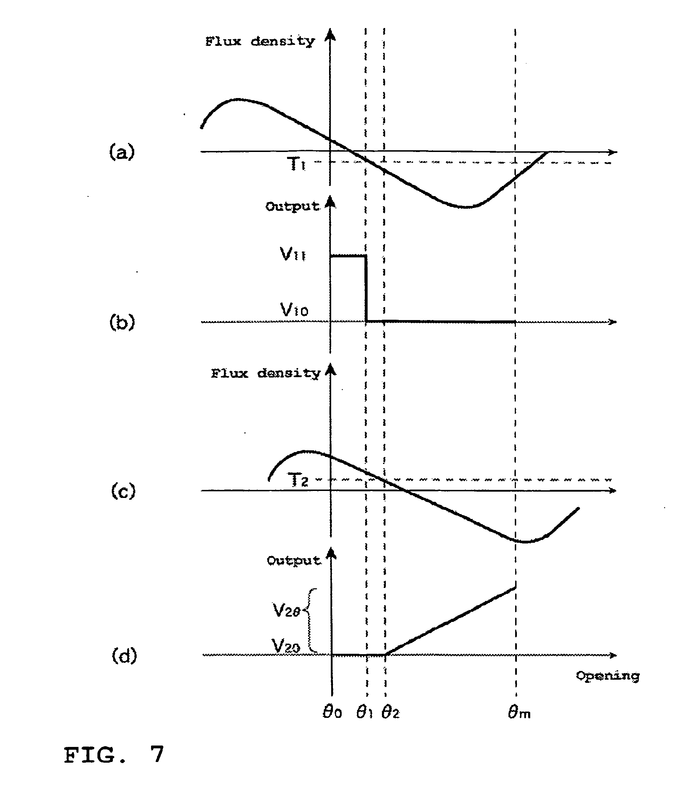

When the accelerator 11 is rotated from the completely-closed position θ0 to the fully-open position θm, the flux density the digital Hall IC 21 receives, changes as shown in Fig. 7(a). This digital Hall IC 21 is arranged so as to receive magnetic force from the permanent magnet 17 at all times throughout the range in which the accelerator 11 and the housing 12 displace relative to each other.

Further, regarding a first detection signal from the digital Hall lC 21, a voltage V11 is outputted when the flux density at the position is not smaller than a given threshold T1, and a voltage V10 is outputted when the flux density is smaller than the given threshold T1. Here, the voltage V10 is zero volt.

In the present embodiment, the digital Hall lC 21 is located at a position to receive magnetic force from the permanent magnet 17 at all times between the completely-closed position θ0 and the fully-open position θm therethrough, and it will receive the magnetic flux as shown in Fig. 7(a).

The linear Hall IC 22 is disposed as shown in Fig. 6 such that it is at a position facing the N-pole of the permanent magnet 17 when the accelerator 11 is at the completely-closed position θ0, and it moves to a position facing the S-pole of the permanent magnet 17 when the accelerator 11 is rotated to the fully-open position θm.

When the accelerator 11 is rotated from the completely-closed position θ0 to the fully-open position θm, the flux density the linear Hall lC 22 receives, is set so as to change monotonously from a position of higher density on the N-pole side to a position of a lower flux density, as shown in Fig. 7(c).

The range of the monotonous change of the flux density is a range from the completely-closed position θ0 to the fully-open position θm, or a range in which the flux density detected when the accelerator 11 displaces from the fully-open position θm to the completely-closed position θ0, increases or decreases without passing the position of an extreme value, and here, it is a range in which the flux density decreases monotonously.

Further, regarding a second detection signal from the linear Hall IC 22, a voltage V20 is outputted when the flux density at the position is not smaller than a given threshold T2 and a voltage V2θ corresponding to the flux density is outputted in inversely proportional to the flux density when the flux density is smaller than the given threshold T2. Here, the voltage V20 is zero volt.

The control section 14 to which are inputted these outputs of the digital Hall lC 21 and the linear Hall lC 22, is arranged such that when the output from the digital Hall lC 21 changes from V11 to V10, it outputs to the controller 16 a control signal to stop power supply to the motor as a drive source, and when the output from the digital Hall lC 21 is not V11 but V10, it outputs to the controller 16 a control signal corresponding to the output of the linear Hall IC 22, enabling the number of revolution of the drive source to change in response to the output of the linear Hall lC 22.

Now, an example in which a drive motor or the like as a drive source is operated by the accelerator 11 through the controller 16, will be described in a motorcycle equipped with a relative position detection device having the foregoing construction.

Firstly, since between the completely-closed position θ0 as a reference position and a given opening θ1, the flux density at the position of the digital Hall IC 21 is not smaller than a threshold value T1, as shown in Fig. 7(a), the first detection signal V11 indicative of the completely-closed position θ0 is outputted from the digital Hall IC 21, as shown in Fig. 7(b). At this time, since the flux density at the position of the linear Hall IC 22 is not smaller than a threshold T2, as shown in Fig. 7(c), the second detection signal V20 corresponding to the completely-closed position θ0 is outputted from the linear Hall IC 22, as shown in Fig. 7(d). These outputs from the digital Hall IC 21 and the linear Hall IC 22 are sent to the control section 14 through the wires 13a for the detection signal, and a control signal to stop power supply to the motor is sent to the controller 16 from the control section 14 through the wire 14a for the control signal.

When the accelerator 11 is rotated from the position a little in the direction "A" to make the opening larger than a given opening θ1, the flux density at the position of the digital Hall IC 21 becomes larger than a given threshold T1 and the first detection signal V10 is outputted. At this time, since in this embodiment, the flux density at the position of the linear Hall lC 22 is larger than a given threshold T2, a condition is maintained in which the second detection signal V20 is outputted from the linear Hall IC 22. Therefore, a control signal to stop power supply to the motor is outputted from the control section 14.

Then, since when the accelerator 11 is rotated further in the direction "A" and the opening becomes larger than a given opening θ2, the flux density at the position of the linear Hall lC 22 becomes smaller than T2, a condition is maintained in which the first detection signal V10 is outputted from the digital Hall lC 21, while a second detection signal V2θ corresponding to change in flux density is outputted from the linear Hall lC 22 and transmitted to the control section 14 through the wires 13a for the detection signal. Therefore, a control signal corresponding to the second detection signal V2θ is outputted to the controller 16 and the drive source is controlled to correspond to the second detection signal V2θ.

Further, since when the accelerator 11 is set to a full-open position θm, the flux density at the position of the digital Hall lC 21 is smaller than a given threshold T1, a condition is maintained in which the first detection signal V10 is outputted, and the accelerator is set to a fully-open position θm to correspond to the second detection signal V2θ from the linear Hall lC 22.

On the other hand, when the accelerator 11 is rotated opposite to the direction "A," the accelerator opening in a range larger than the opening θ2 is operated to correspond to the second detection signal V2θ from the linear Hall lC 22 and in an opening range smaller than the opening θ2, power supply to the motor is shut down.

According to the motorcycle using the (relative) position detection device as described above, in the condition in which the first detection signal V11 indicative of the completely-closed position 80 is outputted from the digital Hall IC 21, a control signal corresponding to the completely-closed position θ0 can be outputted from the control section 14 and in the condition in which the first detection signal V10 indicative of the opening state of the accelerator 11 is outputted from the digital Hall lC 21, a control signal corresponding to the second detection signal V2θ from the linear Hall IC 22 can be outputted from the control section 14. Therefore, in the condition in which the accelerator 11 is disposed at a completely-closed position θ0 with respect to the housing 12, if the first detection signal V10 indicative of the opening state of the accelerator 11 is outputted instead of the first detection signal V11 indicative of the completely-closed position θ0 being outputted from the digital Hall IC 21 as a result of malfunction or the like, the second detection signal V20 indicative of the completely-closed position θ0 has been outputted from the linear Hall IC 22, so that a control signal corresponding to the completely-closed state in which power supply is stopped, is outputted from the control section 14.

Even when the second detection signal V2θ indicative of the opening state of the accelerator 11 is outputted from the linear Hall IC 22 as a result of malfunction or the like, a first detection signal V11 indicative of the completely-closed position θ0 has been outputted from the digital Hall IC 21, so that a control signal corresponding to the completely-closed state in which power supply is stopped, is outputted from the control section 14.

As a result, since a control signal for the control to the completely-closed state in which power supply is stopped, is outputted from the control section 14 in spite of malfunctions in the Hall ICs 21, 22, safety can be secured.

Further, the digital Hall lC 21 by which the fact is detected of whether or not the accelerator 11 is at a completely-closed position θ0, is disposed at a position so as to receive magnetic force at all times from the permanent magnet 17 in the entire range in which the accelerator 11 and the housing 12 displace relative to each other, that is, in the entire rotating range of the accelerator 11 (from the completely-closed position θ0 to the fully-open position 8m therethrough), it is hardly subjected to the influence of magnetic force from the outside and no malfunction occurs easily.

That is, since the digital Hall IC 21 is a Hall IC for detecting whether or not the accelerator is at a completely-closed position θ0, essentially, it may be satisfactory if the digital Hall IC receives magnetic force only at this position. However, if magnetic force is applied to the digital Hall IC 21 from the outside at a position other than the completely-closed one, the magnetic force might lead to misdetection in which the accelerator is erroneously considered to be at a completely-closed position θ0.

Therefore, since in the present embodiment, the digital Hall lC 21 is adapted to receive magnetic force at all times from the permanent magnet 17 even when the accelerator is at a position other than the completely-closed one, if external magnetic force is applied, its influence is small and the digital Hall IC becomes stronger against the external magnetic force, suppressing the occurrence of malfunction.

In addition, if the permanent magnet 17 is fixed to the accelerator 11, and the digital Hall lC 21 and the linear Hall lC 22 are fixed, in a non-contact relation with the permanent magnet 17, in the magnetic field for the detection of the permanent magnet 17 in the housing 12 fixed to the handlebar 10, independent two detection signals can be obtained, these detection signals are inputted to the control section 14, and a control signal based on the digital Hall IC 21 or the linear Hall IC 22 which is free from erroneous operation, can be outputted from the control section 14, so that no potentiometer or the like used in a conventional system is required and a relative position detection device capable of easily preventing malfunction of a drive source can be constructed compactly at a low cost, enabling its easy installation around the accelerator grip.

Further, compared with when a potentiometer is used as in a conventional system, no member such as a potentiometer having a shape larger than that of the accelerator 11 is required and wires or the like connecting the accelerator 11 and the potentiometer are unnecessary, so that the quality of external appearance can be improved easily, the number of parts and human-hours for assembling can be kept small.

Further, since the linear Hall lC 22 is located within a range in which the flux density of the magnetic field for detection changes monotonously, a second detection signal V2θ changing monotonously can be produced easily by rotating the accelerator 11 and a control signal corresponding to the opening of the accelerator 11 can be outputted easily from the control section 14.

Moreover, since the N-pole and the S-pole of the permanent magnet 17 are arranged disposed side by side in the direction "A" in which the accelerator 11 is rotated with respect to the housing 12, change of the direction of the magnetic line becomes large near the boundary section 17c between the N-pole and the S-pole, and this position can be detected as a completely-closed position easily by the digital Hall IC 11.

Further, since a magnetic metal plate 19 disposed separate from and facing the permanent magnet 17, is embedded in the circuit board 20, and the digital Hall lC 21 and the linear Hall lC 22 are disposed between the metal plate 19 and the permanent magnet 17, the flux of the magnetic field for detection formed by the permanent magnet 17 can be collected toward the metal plate 19 and the flux density can be detected easily by the digital Hall IC 21 and the linear Hall IC 22 compared with when the metal plate 19 is not provided.

At the same time, since the digital Hall lC 21 and the linear Hall lC 22 are disposed between the metal plate 19 and the permanent magnet 17, the magnetic flux from the outside is shut off by the metal plate 19 and scarcely reaches the digital Hall lC 21 and the linear Hall IC 22, and the occurrence of malfunction can be suppressed.

Although magnetic force the digital Hall IC 21 receives at all times, is emitted mainly from the S-pole in this embodiment, it is to be understood that the teaching of the present embodiment is not limited to that, and magnetic force may be the force emitted from the N-pole.

The description above discloses (amongst others) an embodiment of a relative position detection device having a first member and a second member which are capable of relative displacement to each other, the first member comprising a magnet and the second member comprising a first Hall IC for outputting a detection signal of a reference position from the flux density of a magnetic field formed by the magnet, characterized in that the magnet has an S-pole section and an N-pole section that are arranged side by side in the direction of the relative displacement; and the first Hall IC is configured so as to receive magnetic force from the magnet at all times throughout a range in which the first member and the second member displace relative to each other.

In addition to the embodiment as set forth above, the first Hall IC may be a digital Hall IC.

According to the embodiments of the relative position detection device as set forth above, since the first Hall IC is configured so as to receive magnetic force from the magnet at all times throughout a range in which the first member and the second member displace relative to each other, it is strong against disturbance (magnetic force from the outside) and does not malfunction easily.

Further, if a magnet is fixed to one of the first and the second member capable of relative displacement to each other and a Hall IC is fixed in the same magnetic field for detection formed by the magnet in a non-contact relation with the magnet, then a detection signal can be obtained, so that no potentiometer or the like used in a conventional system is required and a relative position detection device capable of easily preventing the foregoing malfunction, can be constructed compactly at a low cost.

Further, the magnet is configured such that its N-pole and S-pole are disposed side by side in the direction in which the first member and the second member displace relative to each other. Therefore, change in the direction of the magnetic lines is large between the N-pole and the S-pole, so that the first Hall lC can detect the position easily as a reference position.

In addition to the embodiments as set forth above, the second member may further comprise a second Hall IC for detecting change of the flux density, and the second Hall IC may be located in a range within which the flux density of the magnetic field of the magnet changes monotonously.

Accordingly, the first member and the second member displace relative to each other between a reference position and a maximum displacement position, and the magnet and the second Hall IC are fixed to the first member and the second member such that the second Hall IC is disposed within a range in which the flux density of the magnetic field for detection changes monotonously. Therefore, if the first member and the second member displace relative to each other, then a monotonously changing detection signal can be produced easily and the amount of displacement of the first member relative to the second member can be detected.

In addition to the embodiments as set forth above, there might be provided a magnetic metal plate that is disposed separate from and facing the magnet, wherein the first Hall lC is disposed between the metal plate and the magnet.

Accordingly, a magnetic metal plate is disposed separate from and opposite the magnet, and the first Hall lC is disposed between the metal plate and the magnet. Therefore, the flux of the magnetic field for detection formed by the magnet can be collected toward the metal plate, so that the first Hall lC can detect the magnetic flux easily, compared with when such metal plate is not provided. At the same time, since the first Hall lC is disposed between the metal plate and the magnet, the magnetic flux from the outside is shut off by the metal plate and scarcely reaches the first Hall lC, preventing malfunction or the like easily.

The description above further discloses an embodiment of an astride riding type vehicle having the (relative) position detection device, as set forth above, that is mounted thereon for the control of accelerator opening of an internal combustion engine, wherein one of the magnet and the first Hall IC is fixed to a handlebar and the other to an accelerator grip mounted to the handlebar for rotation, and the relative position detection device is mounted in such a manner that a completely-closed position of the accelerator grip is defined as the reference position.

According to an embodiment of the astride riding type vehicle as set forth above, the foregoing (relative) position detection device is mounted in such a manner that a completely-closed position of the accelerator grip is defined as the reference position. Therefore, malfunction of the first Hall lC due to the external magnetic force is suppressed when the accelerator grip is rotated, that is, the occurrence of malfunction of the accelerator can be suppressed.

Further, since the magnet and the Hall IC are fixed to the handlebar and the accelerator, respectively, and the accelerator opening can be controlled by detecting the position of the accelerator grip, no potentiometer or the like used in a conventional system is required, enabling a compact arrangement, and a relative position detection device can also be provided around the accelerator grip. Further, no wires or the like for connecting the accelerator grip and the potentiometer are needed, so that the quality of external appearance can be improved easily and the number of parts and human-hours for assembling can be kept small.

Within the description above, in order to provide a relative position detection device in which malfunction scarcely occurs and a compact and inexpensive construction can be effected, there is preferably disclosed a relative position detection device having an accelerator 11 and a housing which are capable of relative displacement to each other, the accelerator 11 comprising a permanent magnet 17 and the housing comprising a digital Hall IC 21 for outputting a detection signal of a completely-closed position θ0 from the flux density of a magnetic field formed by the permanent magnet 17, wherein the permanent magnet 17 has an S-pole section and an N-pole section disposed side by side in the direction of relative displacement, while the digital Hall IC 21 is configured so as to receive magnetic force from the permanent magnet 17 at all times throughout a range in which the accelerator 11 and the housing are displaced relative to each other.

## Claims

1. Position detection device having a first member (11) and a second member (12), which are capable of relative displacement to each other, the first member (11) comprising a magnet, and the second member (12) comprising a first magnetic field property sensor for outputting a detection signal of a reference position from a magnetic field property of a magnetic field formed by the magnet, wherein the magnet has an S-pole section and an N-pole section that are arranged side by side in the direction of the relative displacement; and the first magnetic field property sensor is configured so as to receive magnetic force from the magnet at all times throughout a range in which the first member (11) and the second member (12) are displaceable relative to each other,
**characterised in that**
the first magnetic field property sensor is a digital magnetic field property sensor, and
the second member (12) further comprises a second magnetic field property sensor being located in a range within which the magnetic field property of the magnet changes monotonously.

2. Position detection device according to claim 1, wherein the first magnetic field property sensor is a first Hall effect sensor, and wherein the magnetic property is a flux density of the magnetic field formed by the magnet.

3. Position detection device according to claim 2, wherein the first Hall effect sensor is a digital Hall IC.

4. Position detection device according to claim 2 or 3, wherein the second member further comprises a second Hall effect sensor for detecting change of .the flux density, and the second Hall effect sensor is located in a range within which the flux density of the magnetic field of the magnet changes monotonously.

5. Position detection device according to one of claims 1 to 4, further comprising a magnetic metal plate that is disposed separate from and facing the magnet; wherein at least the first Hall effect sensor is disposed between the metal plate and the magnet.

6. Astride riding type vehicle having the position detection device according to one of claims 1 to 5, mounted thereon for the control of accelerator opening of an internal combustion engine, wherein one of the magnet and the first Hall effect sensor is fixed to a handlebar and the other to an accelerator grip mounted to the handlebar for rotation, and the position detection device is mounted in such a manner that a completely-closed position of the accelerator grip is defined as the reference position.

## Patentansprüche

1. Positionserfassungsvorrichtung mit einem ersten Teil (11) und einem zweiten Teil (12), die in der Lage sind, sich in Bezug zueinander zu verlagern, wobei das erste Teil (11) einen Magnet aufweist und das zweite Teil (12) einen ersten Magnetfeldeigenschaft- Sensor aufweist, zum Ausgeben eines Erfassungssignales einer Bezugsposition von einer Magnetfeldeigenschaft eines Magnetfeldes, gebildet durch den Magnet, wobei der Magnet einen S- Polabschnitt und einen N- Polabschnitt hat, die nebeneinander in der Richtung der relativen Verlagerung angeordnet sind; und der erste Magnetfeldeigenschaft- Sensor konfiguriert ist, um eine Magnetkraft von dem Magneten ständig über einen Bereich aufzunehmen, in dem das erste Teil (11) und das zweite Teil (12) in Bezug zueinander verlagerbar sind,
**dadurch gekennzeichnet, dass**
der erste Magnetfeldeigenschaft- Sensor ein digitaler Magnetfeldeigenschaft- Sensor ist, und
das zweite Teil (12) außerdem einen zweiten Magnetfeldeigenschaft- Sensor aufweist, der in einem Bereich angeordnet ist, in dem sich die Magnetfeldeigenschaften des Magneten monoton verändern.

2. Positionserfassungsvorrichtung nach Anspruch 1, wobei der erste Magnetfeldeigenschaft- Sensor ein erster Hall- Effekt- Sensor ist und wobei die Magneteigenschaft eine Flußdichte des Magnetfeldes ist, gebildet durch den Magnet.

3. Positionserfassungsvorrichtung nach Anspruch 2, wobei der erste Hall- Effekt- Sensor ein digitaler Hall- IC ist.

4. Positionserfassungsvorrichtung nach Anspruch 2 oder 3, wobei das zweite Teil außerdem einen zweiten Hall- Effekt- Sensor zum Erfassen einer Veränderung der Flußdichte aufweist und der zweite Hall- Effekt- Sensor in einem Bereich angeordnet ist, in dem sich die Magnetfeldeigenschaften des Magnetes monoton verändern.

5. Positionserfassungsvorrichtung nach einem der Ansprüche 1 bis 4, außerdem aufweisend eine magnetische Metallplatte, die separat von und dem Magneten zugewandt angeordnet ist; wobei zumindest der erste Hall- Effekt- Sensor zwischen der Metallplatte und dem Magneten angeordnet ist.

6. Fahrzeug vom Grätschsitz- Typ mit der Positionserfassungsvorrichtung nach einem der Ansprüche 1 bis 5, daran montiert für die Steuerung der Beschleunigeröffnung einer Brennkraftmaschine, wobei einer von dem Magnet oder dem ersten Hall- Effekt- Sensor an einer Lenkstange und der andere an einem Beschleunigergriff, montiert an der Lenkstange zur Drehung, montiert ist, und die Positionserfassungsvorrichtung in solch einer Weise montiert ist, dass eine vollständig- geschlossene Position des Beschleunigergriffs als die Bezugsposition definiert ist.

## Revendications

1. Dispositif de détection de position ayant un premier élément (11) et un second élément (12) qui peuvent effectuer un déplacement relatif l'un par rapport à l'autre, le premier élément (11) comprenant un aimant, et le second élément (12) comprenant un premier capteur de propriété de champ magnétique pour produire un signal de détection d'une position de référence à partir d'une propriété de champ magnétique d'un champ magnétique formé par l'aimant, dans lequel l'aimant a une section de pôle S et une section de pôle N qui sont agencées côte à côte dans la direction du déplacement relatif ; et le premier capteur de propriété de champ magnétique est configuré pour recevoir la force magnétique de l'aimant à tous moments dans une plage dans laquelle le premier élément (11) et le second élément (12) peuvent se déplacer l'un par rapport à l'autre,
**caractérisé en ce que** :
le premier capteur de propriété de champ magnétique est un capteur de propriété de champ magnétique numérique, et
le second élément (12) comprend en outre un second capteur de propriété de champ magnétique qui est placé dans une plage dans laquelle la propriété de champ magnétique de l'aimant change de manière monotone.

2. Dispositif de détection de position selon la revendication 1, dans lequel le premier capteur de propriété de champ magnétique est un premier capteur à effet Hall et dans lequel la propriété magnétique est une densité de flux du champ magnétique formé par l'aimant.

3. Dispositif de détection de position selon la revendication 2, dans lequel le premier capteur à effet Hall est un circuit intégré à effet Hall numérique.

4. Dispositif de détection de position selon la revendication 2 ou 3, dans lequel le second élément comprend en outre un second capteur à effet Hall pour détecter le changement de la densité de flux et le second capteur à effet Hall est placé dans une plage dans laquelle la densité de flux du champ magnétique de l'aimant change de manière monotone.

5. Dispositif de détection de position selon l'une quelconque des revendications 1 à 4, comprenant en outre une plaque métallique magnétique qui est disposée séparément de et faisant face à l'aimant ; dans lequel au moins le premier capteur à effet Hall est disposé entre la plaque métallique et l'aimant.

6. Véhicule de type à deux roues ayant le dispositif de détection de position selon l'une quelconque des revendications 1 à 5, monté sur celui-ci pour la commande de l'ouverture d'accélérateur d'un moteur à combustion interne, dans lequel l'un parmi l'aimant et le premier capteur à effet Hall est fixé sur un guidon et l'autre sur une poignée d'accélérateur montée sur le guidon pour la rotation, et le dispositif de détection de position est monté de sorte qu'une position complètement fermée de la poignée d'accélérateur est définie comme étant la position de référence.
